# EUROPEAN PATENT APPLICATION

(11) **EP 1 976 100 A1**
(43) Date of publication of application: **01.10.2008**
(21) Application number: 08153522.1
(22) Date of filing: 28.03.2008
(51) Int. Cl.: H02K 15/00, H02K 3/38

(54) **Phase insulator**

(30) Priority: 30.03.2007 JP 2007090411
(71) Applicant: Kabushiki Kaisha Toyota Jidoshokki, Kariya-shi, Aichi 448-8671 (JP)
(72) Inventor: Uetsuji, Kiyoshi, 2-1, Toyoda-cho Kariya-shi Aichi 448-8671 (JP); Fukasako, Hiroshi, 2-1, Toyoda-cho Kariya-shi Aichi 448-8671 (JP); Hirano, Taizo, 2-1, Toyoda-cho Kariya-shi Aichi 448-8671 (JP); Ikai, Kensuke, 2-1, Toyoda-cho Kariya-shi Aichi 448-8671 (JP); Hamana, Shozo, 2-1, Toyoda-cho Kariya-shi Aichi 448-8671 (JP)
(74) Representative: TBK-Patent

(57) **Abstract**

A phase insulator for a stator of a motor insulates between stator coils. The stator has plural stator coils inserted in slots in a stator core. The phase insulator insulates stator coils from each other. The phase insulator includes insulating sheet portions and bridge portions. The insulating sheet portions are disposed at both end portions of the stator core for insulating between the coil ends of the stator coils. The insulating sheet portions are made of a first material. The bridge portions connect the insulating sheet portions. The bridge portions are inserted in the slots of the stator core. The bridge portions are made of a second material. The second material has higher elastic characteristics than the first material.

## Description

### BACKGROUND OF THE INVENTION

The present invention relates to a phase insulator, more particularly, a phase insulator having insulating sheet portions and bridge portions for connecting the insulating sheet portions. The insulating sheet portions are disposed at both ends of a stator core for insulating between coil ends of stator coils. The bridge portions are inserted in slots between teeth of the stator core.

Generally, plural stator coils are inserted in slots of a stator core of a stator in an electric motor. Each coil is arranged so as to have a different phase with each other. The coil ends of each coil disposed at the stator core protrude at both axial end surfaces of the stator core. The coil ends are arranged so as to overlap in the radial direction with each other. A phase insulator with a sheet shape is disposed between the coils with different phases to insulate between the coils. In recent years, automatic installation of a phase insulator to a stator core has been attempted in manufacturing an electric motor. It is well known that an appropriate phase insulator for automation is formed with a pair of insulating portions and bridge portions. The insulating portions insulate coil ends at the both end surfaces of the stator. The bridge portions connect the pair of the insulating portions.

Such a phase insulator is disclosed in Unexamined Japanese Patent Publication No. 03-40731, whose corresponding U. S. Patent is published as U.S. Patent No. 4,266,994. The phase insulator includes a pair of planar portions and connectors. The planar portions correspond to the above-described insulating portions. The connectors correspond to the above-described bridge portions. The planar portions are made of polyethylene terephthalate (PET). The connectors are made of polyester monofilament, which is stretched in advance to be straightened. The insulating portions and the bridge portions are connected by ultrasonic welding. In this type of phase insulator, the bridge portions of the phase insulator are easily inserted in slots of a stator core.

However, in manufacturing an electric motor incorporated with such a phase insulator, problems occur. During the processes after the installation of the phase insulator to the stator core, the insulating portions and the bridge portions may be torn, or the welded regions may be disjointed. For example, a shaping process is performed for shaping the coil ends of the coils disposed at the stator core. Forces appropriate for shaping coil ends are applied to the coil ends and the phase insulators in the axial and radial directions of the stator core. The forces may be applied to the coil ends and the phase insulators in the direction to separate the insulating portions with each other. In this case, the insulating portions and the bridge portions may be separated from each other, or the insulating portions and the bridge portions may be torn.

When the insulating portions and the bridge portions are separated or torn, the insulating portions are misaligned from the predetermined position, and moved in the direction away from the end surfaces of the stator core. In this case, a part of each stator coil may contact with each other. Thus, the phase insulation between each coil end is not ensured when the phase insulator is moved apart from the stator coils. Additionally, the insulating portions or the bridge portions are separated or torn into pieces, and such pieces may exist as debris in the electric motor.

The present invention is directed to a phase insulator in which an insulating sheet portion and a bridge portion are not to be separated, and the insulating sheet portion and the bridge portion are not to be torn after the phase insulator is installed to a stator core.

### SUMMARY OF THE INVENTION

In accordance with an aspect of the present invention, a phase insulator for a stator of a motor insulates plural stator coils from each other. The stator has the stator coils inserted in slots in a stator core. The phase insulator includes insulating sheet portions and bridge portions. The insulating sheet portions are disposed at both end portions of the stator core for insulating between the coil ends of the stator coils. The insulating sheet portions are made of a first material. The bridge portions connect the insulating sheet portions. The bridge portions are inserted in the slots of the stator core. The bridge portions are made of a second material. The second material has higher elastic characteristics than the first material.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a perspective view of a stator core according to a preferred embodiment of the present invention;
FIG. 2 is a plan view of the stator core where phase insulators are installed according to the preferred embodiment;
FIG. 3 is a schematic plan view of the stator core of FIG. 2;
FIG. 4 is a plan view of the phase insulator according to the preferred embodiment;
FIG. 5 is a graph showing a relation between elongation rate and stress of an insulating sheet portion (PEN) and a bridge portion (FEP); and
FIG. 6 is a side view of a stator core where a U-phase coil and a first phase insulator are installed.

### DETAILED DESCRIPTION OF THE PREFERRED EMBODIMENTS

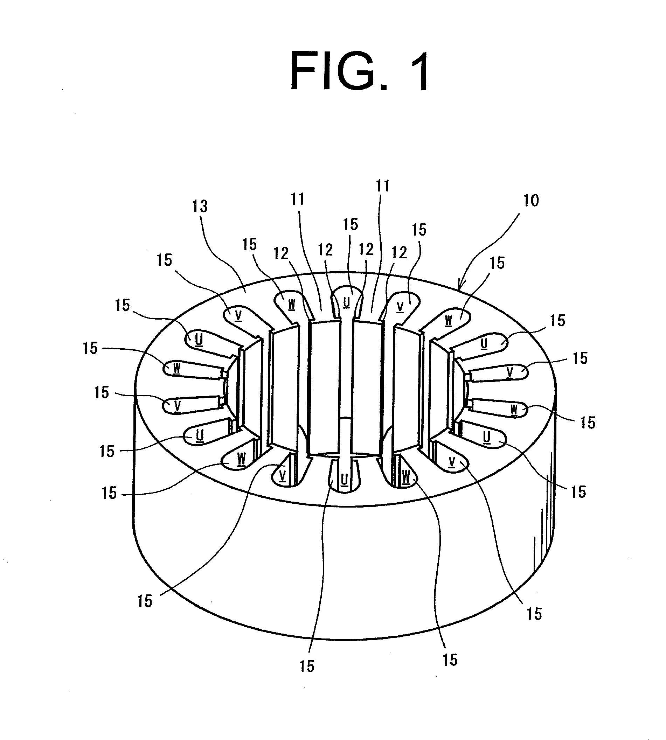

The following will describe a preferred embodiment according to the present invention with reference to FIG. 1 through 6. In the preferred embodiment, a stator core of a stator is incorporated in an electric motor with three-phase distributed windings for an electric compressor. As shown in FIG. 1, a stator core 10 is formed with a substantially cylindrical shape. The stator core 10 has end surfaces 13, 14 at both axial end portions respectively. The end surfaces 13, 14 are formed perpendicular to the axial direction of the stator core 10. FIG. 1 is a perspective view, and the end surface 13 is shown in FIG. 1. Teeth 11 are formed in the inner circumference of the stator core 10, and arranged in the circumferential direction of the stator core 10. The teeth 11 protrude toward the axial center of the stator core 10.

Each of the teeth 11 has protruding portions 12 at the opposite side of the distal end thereof. The protruding portions 12 protrude in the circumferential direction. Slots 15 are formed between adjacent two teeth 11 respectively. Each slot 15 has a space which is formed so as to penetrate the stator core 10 in the axial direction. The slots 15 are aligned at regular intervals. Stator coils are inserted in the slots 15 such that any two adjacent slots 15 have respective stator coils with different phases from each other. According to the preferred embodiment, the stator core 10 includes eighteen teeth 11 and eighteen slots 15. Accordingly, any two adjacent slots 15 are spaced from each other in the circumferential direction of the stator core 10 at an angular interval of 20°.

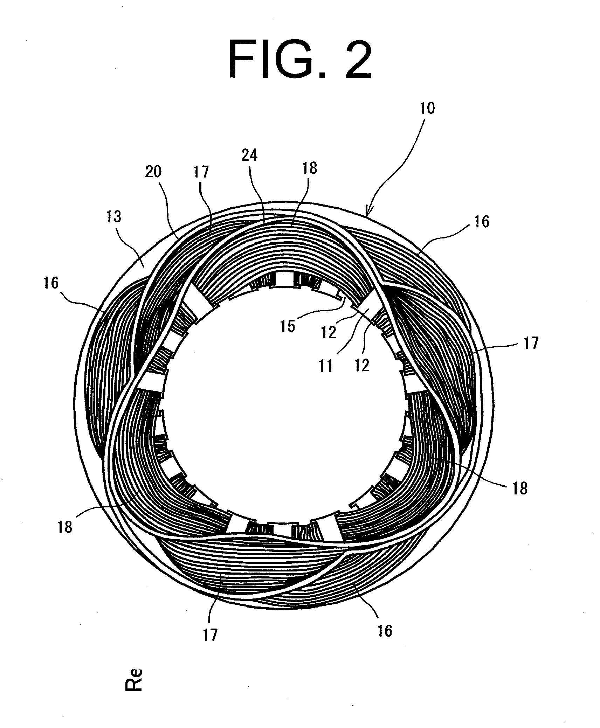

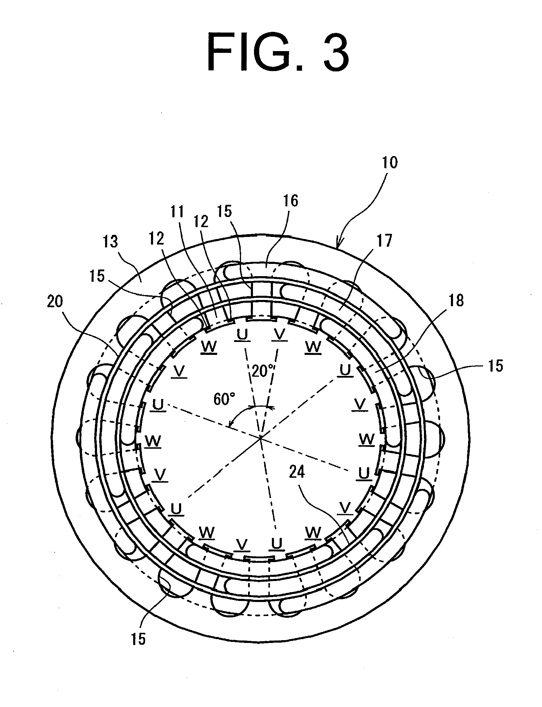

The three-phase stator coils include a U-phase coil 16, a V-phase coil 17, and a W-phase coil 18. The stator coils 16, 17, 18 are formed such that enameled conductive wires are wound respectively. Each stator coil 16, 17, 18 is inserted in six of the eighteen slots 15. For example, between the two slots 15 in which the U-phase coil 16 is inserted, there exist two slots 15 in which the V-phase coil 17 and the W-phase coil 18 are inserted respectively. That is, the stator coils 16, 17, 18 are arranged in the corresponding slots 15 which are spaced at an angular interval of 60° in the circumferential direction of the stator core 10. When all the coils 16, 17, 18 are arranged in the slots 15 of the stator core 10, the stator core 10 is in a state as shown in FIG.2, and as shown schematically in FIG. 3.

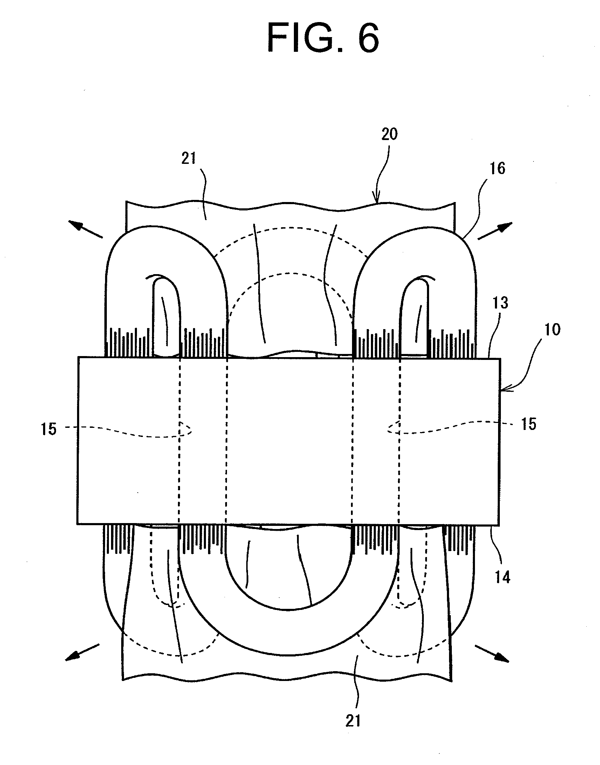

Following will describe the coil ends of the stator coils 16, 17, 18 which are installed to the stator core 10. The U-phase coil 16 passes through one of the slots 15 and the coil end of the coil 16 is exposed at the end surface 13. Then, the U-phase coil 16 passes through the third slot 15 from the foregoing slot 15 where the coil end of the coil 16 is exposed. The coil end of the U-phase coil 16 is exposed at the opposite end surface 14 of the stator core 10. Then, the U-phase coil 16 passes through the third slot 15 from the foregoing slot 15 where the coil end of the coil 16 is exposed at the end surface 14. When the U-phase coil 16 is completely arranged in totally six slots 15 for the U-phase coil 16, the three coil ends are formed at the both end surfaces 13, 14 (shown in FIG. 6), respectively.

The V-phase coil 17 is arranged in the slots 15 of the stator core 10 after the U-phase coil 16 is arranged. The V-phase coil 17 passes through one of the slots 15, which is next to the slot 15 for the U-phase coil 16. Similarly to the U-phase coil 16, the three coil ends of the V-phase coil 17 are formed at the both end surfaces 13, 14, respectively. The W-phase coil 18 is arranged in the remained slots 15 after the V-phase coil 17 is arranged. The W-phase coil 18 is arranged in the similar way to the U-phase coil 16 and the V-phase coil 17. FIG. 2 shows only the coil ends of the stator coils 16, 17, 18 at the end surface 13 of the stator core 10. The coil ends of the stator coils 16, 17, 18 at the end surface 14 are arranged similarly to those at the end surface 13 and therefore omitted.

Thus, the stator coils 16, 17, 18 are installed to the stator core 10 so as to have different phases with each other. Phase insulation is required between the coil ends of the different stator coils 16, 17, 18. In the preferred embodiment, a first phase insulator 20 and a second phase insulator 24 are incorporated between the coils 16, 17, 18. The first phase insulator 20 insulates between the U-phase coil 16 and the V-phase coil 17 at the coil ends, as shown in FIG. 2 and 3. The first phase insulator 20 is installed to the stator core 10 after the installation of the U-phase coil 16 and before the installation of the V-phase coil 17 to the stator core 10. The second phase insulator 24 insulates between the V-phase coil 17 and the W-phase coil 18 at the coil ends. The second phase insulator 24 is installed to the stator core 10 after the installation of the V-phase coil 17 to the stator core 10.

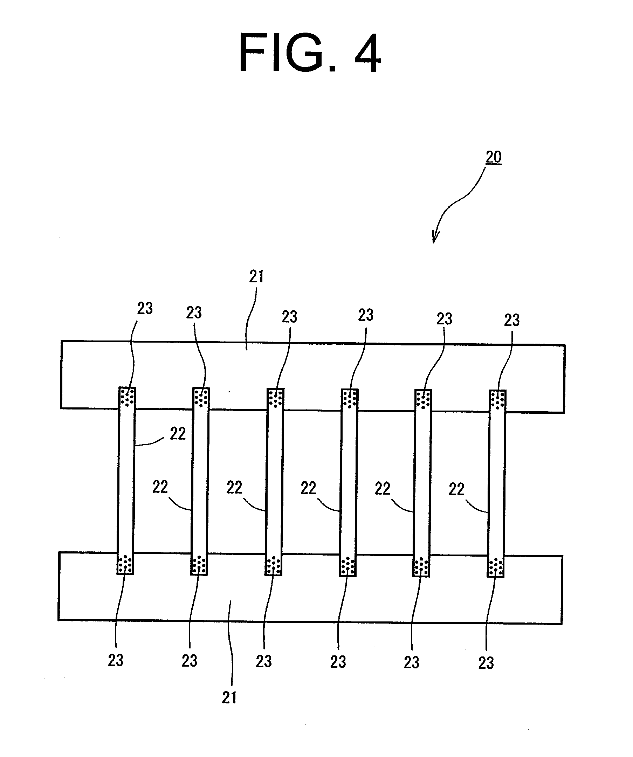

FIG. 4 shows the configuration of the first phase insulator 20. The first phase insulator 20 is formed with a thin film. The first phase insulator 20 includes a pair of insulating sheet portions 21 and bridge portions 22. The pair of insulating sheet portions 21 is disposed at the both end surfaces 13, 14 of the stator core 10 for insulating between the coil ends. The bridge portions 22 connect the pair of the insulating sheet portions 21. The insulating sheet portions 21 insulate the U-phase coil 16 and the V-phase coil 17 at the coil ends. The insulating sheet portions 21 are made of polyethylene naphthalate (hereinafter referred to as PEN) as a first material. PEN has excellent insulating properties and chemical resistance.

The insulating sheet portions 21 have a sufficient length and width such that a single insulating sheet portion 21 insulates between the U-phase coil 16 and the V-phase coil 17 at the coil ends. The insulating sheet portions 21 have a sufficient length (in the vertical direction in the drawing of FIG. 4) to cover the entire area where the U-phase coil 16 and the V-phase coil 17 overlap with each other at the end surfaces 13, 14. The insulating sheet portions 21 have a sufficient width (in the lateral direction in the drawing of FIG. 4) to round completely along the stator core 10 at the inner periphery of the U-phase coil 16.

The bridge portions 22 connect the pair of the insulating sheet portions 21. The bridge portions 22 are inserted in the slots 15 between the teeth 11 of the stator core 10. The bridge portions 22 are formed as an independent part from the insulating sheet portions 21. The bridge portions 22 of the preferred embodiment are cut out from a sheet made of tetrafluoroethylene -hexafluoropropylene copolymer (hereinafter referred to as FEP). FEP corresponds to a second material of the present invention. Both ends of the bridge portions 22 are overlapped on edge portions of the insulating sheet portions 21, and connected to the insulating sheet portions 21 by ultrasonic welding so as to form joints 23.

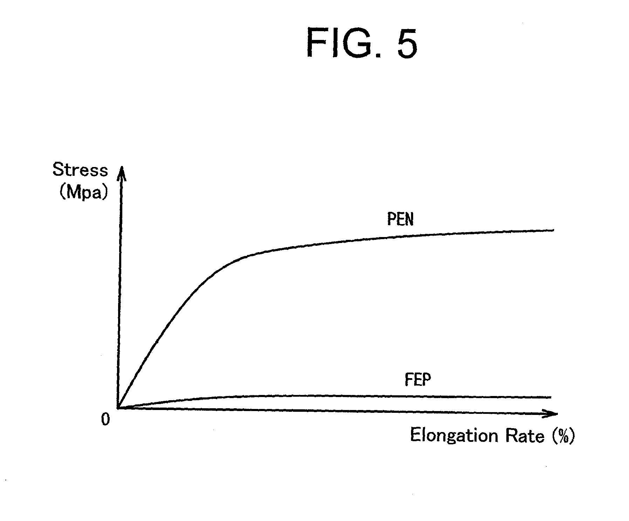

As shown in FIG. 5, FEP for the bridge portions 22 has an extremely low stress which is generated in response to the elongation rate, compared to PEN for the insulating sheet portions 21. That is, FEP as the material for the bridge portions 22 has higher elastic characteristics than PEN. Namely, in an electric compressor, a stator core of an electric motor is exposed in refrigerant gas and mist of lubrication oil. Therefore, FEP with excellent chemical resistance is an appropriate material for the bridge portions 22. The material and the configuration of the second phase insulator 24 is substantially the same as the first phase insulator 20, and the explanation in detail is omitted.

The following will explain the operation of the phase insulator according to the preferred embodiment of the present invention. In assembling an electric motor of the preferred embodiment, a slot insulator (not shown) is arranged in each slot 15 in advance, independently from the phase insulators 20, 24. The slot insulators insulate between the stator core 10 and each coil 16, 17, 18. Firstly, the U-phase coil 16 is arranged in the slots 15 of the stator core 10 so as to be wound around the teeth 11 of the stator core 10. As shown in FIG. 6, when the U-phase coil 16 is arranged in the slots 15 of the stator core 10, three coil ends are formed at the both end surfaces 13, 14 of the stator core 10, respectively.

Then, the first phase insulator 20 is installed to the stator core 10. Each bridge portion 22 of the first phase insulator 20 is inserted in the corresponding slots 15, and the first phase insulator 20 is retained at the stator core 10. Then the insulating sheet portions 21 are arranged circularly along the inner circumference of the coil ends of the U-phase coil 16. After the first phase insulator 20 is installed to the stator core 10, force is applied to the coil ends. The coil ends are pressed by the force such that the axial end portions of the coil ends protruding at the both end surfaces 13, 14 face radially outward (shown by an arrow in FIG. 6).

The above process is a preparation to arrange the V-phase coil 17 easily. In the preparation process, the axial end portions of the coil ends are expanded radially outward. Thereby force is applied on the first phase insulator 20 in the direction to move the both insulating sheet portions 21 away from each other. The both insulating sheet portions 21 are drawn by the force and are moved away from each other. The force is applied to the bridge portions 22 in the direction to draw the bridge portions 22 in the longitudinal direction. Since the bridge portions 22 have higher elastic characteristics than the insulating portions 21, the bridge portions 22 are extended to absorb the force. Due to the extension of the bridge portions 22, an excessive tension does not act on the joints 23 between the insulating sheet portions 21 and the bridge portions 22. Therefore, the insulating sheet portions 21 and the bridge portions 22 are not separated nor torn. Thus, the insulating sheet portions 21 are not moved away from the coil ends.

Then, the V-phase coil 17 is installed to the stator core 10. The V-phase coil 17 is disposed along the inner circumference of the first phase insulator 20. The U-phase coil 16 and the V-phase coil 17 are insulated by the insulating sheet portions 21 of the first phase insulator 20. After the V-phase coil 17 is arranged, the second phase insulator 24 is installed to the stator core 10. After the second phase insulator 24 is arranged, the coil ends are deformed by the pressing force such that the end portions of the coil ends of the V-phase coil 17 face radially outward. The above process is a preparation to arrange the W-phase coil 18 easily.

When deforming the coil ends of the V-phase coil 17, force is applied to the second phase insulator 24 to move the insulating sheet portions (not shown) away from each other. The bridge portions (not shown) with higher elastic characteristics than the insulating sheet portions are extended and absorb the force. Similarly to the first phase insulator 20, due to the extension of the bridge portions in the second phase insulator 24, an excessive tension does not act on the joints between the insulating sheet portions and the bridge portions. Therefore, the insulating sheet portions and the bridge portions are not separated nor torn in the second phase insulator 24.

The W-phase coil 18 is installed to the stator core 10. The W-phase coil 18 is disposed along the inner circumferential surface of the second phase insulator 24. The V-phase coil 17 and the W-phase coil 18 are insulated by the insulating sheet portions of the second phase insulator 24. FIG. 2 shows this state. Thus, the coils 16, 17, 18 are insulated at the coil ends by the first and the second phase insulators 20, 24.

Then, the shaping process is performed. The whole coil ends at the end surfaces 13, 14 of the stator core 10 are pressed and shaped to form a ring shape in which the radial and the axial dimensions are substantially constant. In the shaping process, force is applied on the first phase insulator 20 in the direction to move the insulating sheet portions 21 away from each other. However, the tension due to the force is absorbed by the extension of the bridge portions 22. Thus, the insulating sheet portions 21 and the bridge portions 22 are not separated nor torn. Similarly, the separation and the breakage of the insulating sheet portions and the bridge portions are not caused in the second phase insulator 24, despite the force acting on the second phase insulator 24.

The following advantageous effects are obtained by the above embodiment. Only the first phase insulator 20 is referred, however, the second phase insulator 24 has the same effects obviously.
(1) The bridge portions 22 are made of the second material with higher elastic characteristics than the first material for the insulating sheet portions 21. After the process for installing the coils to the stator core 10, the process for shaping the coil ends is performed. The force required for shaping the coils in the axial and the radial directions is applied to the first phase insulator 20 and the coil ends. The force may be applied in the direction to move the insulating sheet portions 21 of the phase insulator 20 away from each other. In this state, the bridge portions 22 extend to absorb the tension. Therefore, the insulating sheet portions 21 and the bridge portions 22 are not separated nor torn after the installation to the stator core 10.
(2) Since the insulating sheet portions 21 and the bridge portions 22 are not separated nor torn, the insulating sheet portions 21 are not moved away from the coil ends of the coils 16, 17, 18. Therefore, the phase insulation between the coil ends of the coils 16, 17, 18 is reliably performed. Additionally, separated pieces as debris are not produced, and do not deteriorate the performance of the electric motor. Accordingly, it is not necessary to correct the position of the insulating sheet portions 21 or to remove the broken pieces.
(3) FEP for the bridge portions 22 has higher elastic characteristics than PEN for the insulating sheet portions 21. Therefore, the insulating sheet portions 21 and the bridge portions 22 are reliably prevented from being separated therebetween and being torn.
(4) The materials of the insulating portions 21 and the bridge portions 22 are excellent in chemical resistance. Therefore, an electric motor with the phase insulator 20 is able to be applied to various fields. For example, a stator with the phase insulator 20 incorporated in an electric motor is used for the electric compressor. In this case, even if the stator is exposed in refrigerant gas and lubricant oil, the insulating performance of the phase insulator 20 is not deteriorated.
(5) The insulating sheet portions 21 and the bridge portions 22 of the phase insulator 20 are simply cut out from sheet material, and are welded by ultrasonic apparatus. A special machining process is not necessary for producing the insulating sheet portions 21 and the bridge portions 22.

The present invention is not limited to the above-described embodiment, but may be variously modified within the scope of the invention, as exemplified below.

In this embodiment, the insulating sheet portions and the bridge portions are connected by an ultrasonic welding. The insulating sheet portions and the bridge portions may be adhered by an adhesive, or may be pressed so as to be connected with each other. In this case, the connecting portions between the insulating sheet portions and the bridge portions need to have sufficient strength. That is, the connecting portions need to withstand the stress generated by the tension of the bridge portions during the shaping process of the coil ends or the like.

In the preferred embodiment, FEP is utilized as a material for the bridge portions. FEP has higher elastic characteristics compared to PEN for the insulating sheet portions. The materials for the insulating sheet portions and the bridge portions are not limited, as long as the difference in the elastic characteristics between the alternative materials is substantially the same level as that between PEN and FEN. Namely, when the phase insulator is used for an electric compressor, the phase insulator needs chemical resistance. In this case, the insulating sheet portions and the bridge portions may be preferably made of combination of resin series.

In the preferred embodiment, the insulating sheet portions and the bridge portions of the phase insulator have the simplest shape so as not to waste sheet material. The configuration of the insulating sheet portions and the bridge portions is determined appropriately depending on the conditions of the stator core and the coil ends.

The present examples and embodiments are to be considered as illustrative and not restrictive, and the invention is not to be limited to the details given herein but may be modified within the scope of the appended claims.

A phase insulator for a stator of a motor insulates between stator coils. The stator has plural stator coils inserted in slots in a stator core. The phase insulator insulates stator coils from each other. The phase insulator includes insulating sheet portions and bridge portions. The insulating sheet portions are disposed at both end portions of the stator core for insulating between the coil ends of the stator coils. The insulating sheet portions are made of a first material. The bridge portions connect the insulating sheet portions. The bridge portions are inserted in the slots of the stator core. The bridge portions are made of a second material. The second material has higher elastic characteristics than the first material.

## Claims

1. A phase insulator (20, 24) for a stator of a motor, the stator having plural stator coils (16, 17, 18) inserted in slots (15) in a stator core (10), the phase insulator (20, 24) insulating the stator coils (16, 17, 18) from each other, the phase insulator (20, 24) comprising:
insulating sheet portions (21) disposed at both end portions (13, 14) of the stator core (10) for insulating between the coil ends of the stator coils (16, 17, 18); and
bridge portions (22) connecting the insulating sheet portions (21), wherein the bridge portions (22) are inserted in the slots (15) of the stator core (10),
**characterized in that**:
the insulating sheet portions (21) are made of a first material, and the bridge portions (22) are made of a second material, wherein the second material has higher elastic characteristics than the first material.

2. The phase insulator (20, 24) according to claim 1, **characterized in that** the first material is polyethylene naphthalate, and the second material is tetrafluoroethylene-hexafluoropropylene copolymer.

3. The phase insulator (20, 24) according to claims 1 or 2, **characterized in that** the insulating sheet portions (21) are formed with a pair of insulating sheet portions, and the bridge portions (22) connect the pair of insulating sheet portions so as to form joints (23).

4. The phase insulator (20, 24) according to any one of claims 1 through 3, **characterized in that** the insulating sheet portions (21) and the bridge portions (22) are connected by welding.
